# EUROPEAN PATENT APPLICATION

(11) **EP 3 404 404 A1**
(43) Date of publication of application: **21.11.2018**
(21) Application number: 16884994.1
(22) Date of filing: 27.09.2016
(51) Int. Cl.: G01N 21/88, B23K 26/00, B23K 26/21

(54) **METHOD FOR DETECTING HOLE IN LASER-WELDED PORTION AND LASER WELDING DEVICE**

(30) Priority: 14.01.2016 JP 2016005469
(71) Applicant: Nissan Motor Co., Ltd., Yokohama-shi, Kanagawa 221-0023 (JP)
(72) Inventor: KAGIYA, Kazuhiko, Atsugi-shi Kanagawa 243-0123 (JP); NONAKA, Shintaro, Atsugi-shi Kanagawa 243-0123 (JP); SAITO, Hideo, Atsugi-shi Kanagawa 243-0123 (JP)
(74) Representative: Global IP Europe Patentanwaltskanzlei
(86) International application number: PCT/JP2016/078492
(87) International publication number: WO 2017/122391

(57) **Abstract**

[Problem] To easily detect a hole defect that occurs after welding.

[Solution] A laser welding device 10 comprises a laser irradiation unit 30 that irradiates laser beam 31, a visible light sensor 41 that detects the emission intensity V1 of the visible light 40 that is emitted from a welded portion 21 that is welded using laser beam that is irradiated from a laser irradiation unit, and a control unit 70. The control unit can freely switch the operation of the laser irradiation unit between a welding mode for welding a plurality of metal members 20 to each other by irradiating laser beam and an inspection mode for irradiating the laser beam again onto the welded portion 21 as an inspection light 32. The control unit switches the operation of the laser irradiation unit to the inspection mode after the welding mode and irradiates the laser beam again from the laser irradiation unit onto the welded portion as an inspection light. The control unit further detects a hole that is generated after welding based on changes in the emission intensity of the visible light that is emitted from the welded portion due to irradiation of the inspection light, based on a detection signal from the visible light sensor.

## Description

### Technical Field

The present invention relates to method for detecting holes in a laser welded portion and a laser welding device.

### Background Art

Typically, when assembling the body or a structure of an automobile, metal members are formed by press-forming steel plates into desired shapes, after which a plurality of metal members are partially overlapped and laser beam is irradiated onto the overlapped portions to carry out welding and joining.

A technique for monitoring the quality of laser welded portions during laser welding has been proposed (refer to Patent Document 1). In the monitoring method disclosed in Patent Document 1, the emission intensity of visible light radiated from the welded portion during a laser welding process and the intensity of reflected light from the welded portion are detected. Then, the quality of the welded portion is determined based on the intensity of a lower frequency component that is equal to or less than an arbitrary frequency, and the intensity of a high frequency component that exceeds said arbitrary frequency, as frequency components of these detected signals.

### Prior Art Documents

### Patent Documents

Patent Document 1: Japanese Laid-Open Patent Application No. 2000-271768

### Summary of the Invention

### Problem to be Solved by the Invention

In laser welding, there are cases in which molten metal is blown away by gas that is generated during the melting of a metal member, causing a lack in the molten metal and generating a hole during solidification. Such hole defects occur after welding, so the defects cannot be detected even if the monitoring technology during laser welding as disclosed in the prior art described above is employed. There is a demand to improve the welding quality by making it possible to easily detect hole defects that occur after welding.

Accordingly, an object of the present invention is to provide a hole detection method of a laser welded portion and a laser welding device that can easily detect hole defects that occur after welding.

### Means of Achieving the Object

In the hole detection method of a laser welded portion according to the present invention that achieves the object described above, laser beam is irradiated to weld a plurality of metal members to each other, after which the laser beam is irradiated again onto the welded portion as an inspection light. Then, the emission intensity of the visible light that is emitted from the welded portion is detected by irradiating the inspection light to detect holes generated after welding based on changes in the emission intensity of the visible light.

The laser welding device of the present invention that achieves the object described above comprises a laser irradiation unit that irradiates laser beam, a visible light sensor that detects the emission intensity of the visible light emitted from the welded portion that is welded by laser beam irradiated from the laser irradiation unit, and a control unit. The control unit can freely switch the operation of the laser irradiation unit between a welding mode for welding a plurality of metal members to each other by irradiating laser beam and an inspection mode for irradiating laser beam again onto the welded portion as an inspection light. The control unit switches the operation of the laser irradiation unit to the inspection mode after the welding mode and irradiates laser beam again from the laser irradiation unit onto the welded portion as an inspection light. The control unit further detects holes generated after welding based on changes in the emission intensity of the visible light that is emitted from the welded portion due to irradiation of the inspection light, based on a detection signal from the visible light sensor.

### Brief Description of the Drawings

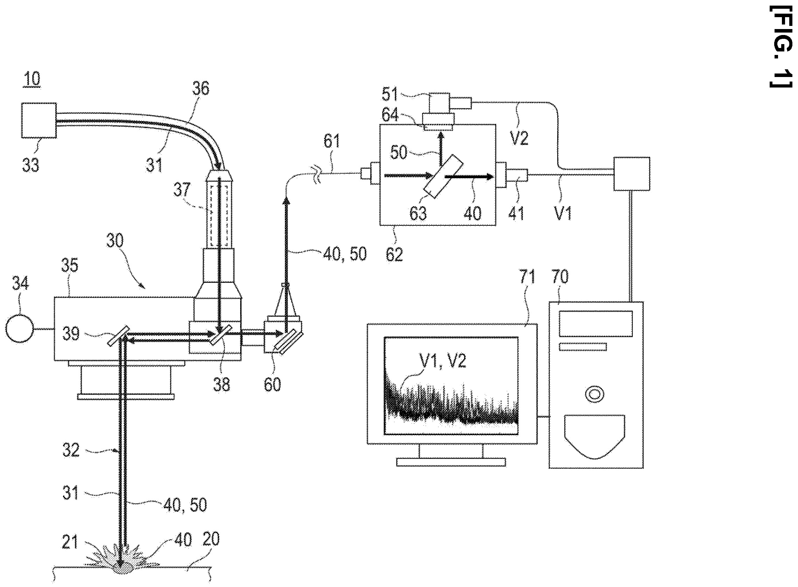

[Figure 1] Schematic overview illustrating a laser welding device according to an embodiment of the present invention.

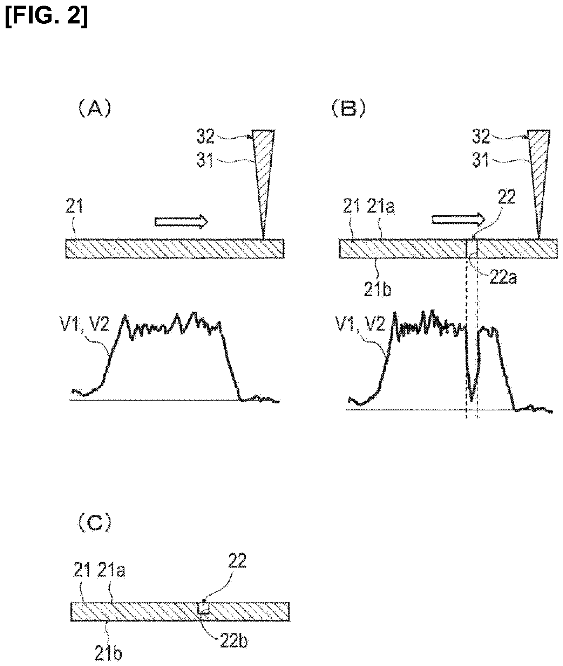

[Figure 2] Figures 2(A) and (B) are explanatory views illustrating the principle of a method for detecting a hole that is generated in a laser welded portion after welding, and Figure 2(A) is a view illustrating changes in the emission intensity of the visible light and changes in the intensity of the reflected light when a hole is not generated in the laser welded portion after welding. Figure 2(B) is a view illustrating changes in the emission intensity of the visible light and changes in the intensity of the reflected light when a hole (through-hole) is generated in the laser welded portion after welding. Figure 2(C) is a view illustrating a state in which a hole (non-through-hole) is generated in the laser welded portion after welding.

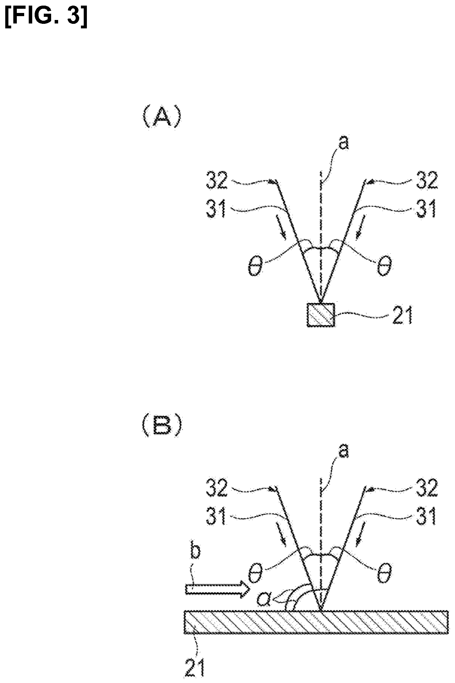

[Figure 3] Figures 3(A) and (B) are explanatory views illustrating the irradiation angle, with respect to the welded portion, of the laser beam as an inspection light irradiated onto the laser welded portion, and Figure 3(A) illustrates the irradiation angle within a plane that intersects a direction in which the welded portion extends, that is, the scanning direction of the laser beam. Figure 3(B) illustrates the irradiation angle within a plane that includes the direction in which the welded portion extends, that is, the scanning direction of the laser beam.

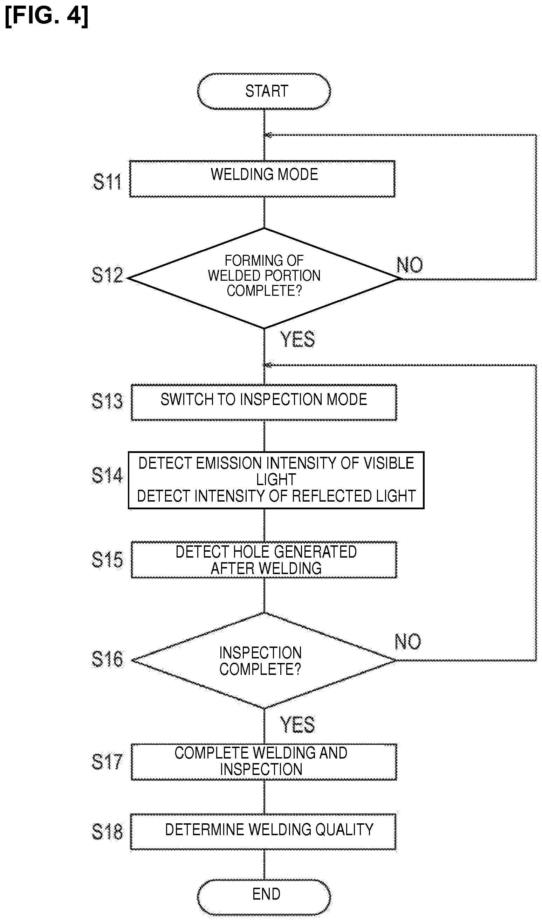

[Figure 4] Flowchart explaining the operation of a laser welding device.

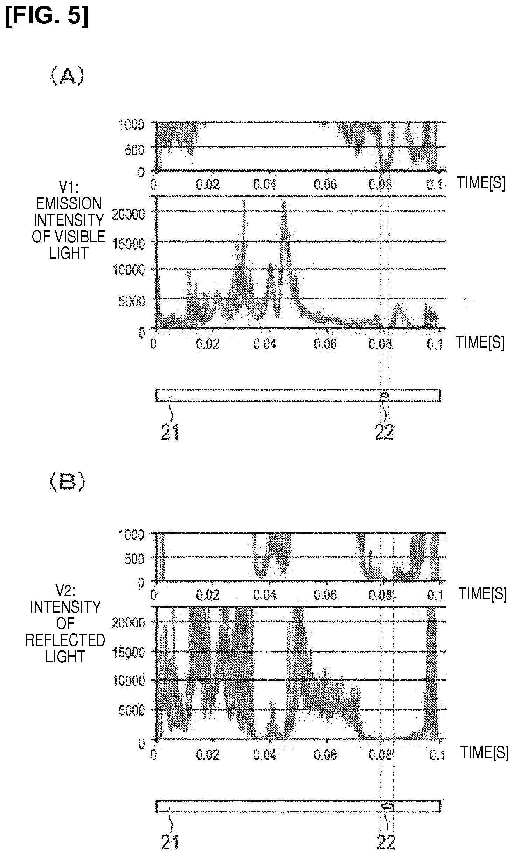

[Figure 5] Figures 5(A) and (B) are views illustrating the result of carrying out an experiment to detect a hole using a test piece in which a hole has been formed; Figure 5(A) is a graph illustrating a test piece in which a hole has been formed and changes in the emission intensity of the visible light, and Figure 5(B) is a graph illustrating a test piece in which a hole has been formed and changes in the intensity of the reflected light.

### Embodiments to Carry Out the Invention

Embodiments of the present invention will be explained below, with reference to the appended drawings. In the explanations of the drawings, the same elements are given the same reference symbols, and redundant explanations are omitted. The dimensional ratios in the drawings are exaggerated for convenience of explanation and are different from the actual ratios.

Figure 1 is a schematic overview illustrating a laser welding device 10 according to an embodiment of the present invention.

Referring to Figure 1, the illustrated laser welding device 10 is a YAG laser welding device comprising, in general, a laser irradiation unit 30 that irradiates laser beam 31, a first sensor 41 (corresponding to a visible light sensor 41) that detects the emission intensity V1 of visible light 40 radiated from the welded portion 21 that is welded by laser beam 31 irradiated from the laser irradiation unit 30, and a control unit 70 that controls the operation of the laser irradiation unit 30. The control unit 70 can freely switch the operation of the laser irradiation unit 30 between a welding mode for welding a plurality of metal members 20 to each other by irradiating laser beam 31 and an inspection mode for irradiating the light 31 again onto the welded portion 21 as an inspection light 32. The control unit 70 switches the operation of the laser irradiation unit 30 to the inspection mode after the welding mode and irradiates laser beam 31 again from the laser irradiation unit 30 onto the welded portion 21 as an inspection light 32. Then, the control unit 70 detects a hole 22 (refer to Figure 2(B) and (C)) generated after welding based on changes in the emission intensity V1 of visible light 40 emitted from the welded portion 21 due to irradiation of the inspection light 32, based on a detection signal from the first sensor 41. In addition to the first sensor 41, the illustrated laser welding device 10 comprises a second sensor 51 (corresponding to a reflected light sensor 51) that detects the intensity V2 of the reflected light 50 from the welded portion 21 of the laser beam 31 that is irradiated as an inspection light 32. The control unit 70 detects a hole 22 that is generated after welding based on changes in the emission intensity V1 of the visible light 40 and changes in the intensity V2 of the reflected light 50 based on a detection signal from the second sensor 51. The details are described below.

The laser irradiation unit 30 comprises a YAG laser oscillator 33 and a scan head 35 attached to a robot hand 34. Laser beam 31 that is generated in the YAG laser oscillator 33 is led to the scan head 35 by means of an optical fiber 36. The scan head 35 incorporates a variable focus mechanism 37 that includes a condenser lens, a collecting lens, and the like therein. The laser beam 31 whose focal position has been adjusted is condensed onto a surface of a metal member 20 by means of a mirror 38 and a swingable scan mirror 39. The laser beam 31 can be scanned along any trajectory, such as a linear shape, a curved shape, a circular shape, an arc shape, or the like. A plurality of metal members 20 is welded to each other by being irradiated with laser beam 31, and a weld bead is formed as a welded portion 21.

In the inspection mode, when laser beam 31 is irradiated onto the welded portion 21 again as an inspection light 32, visible light 40 is emitted from the welded portion 21 heated by the irradiation of the inspection light 32. In addition, a portion of the laser beam 31 irradiated as an inspection light 32 is not absorbed by the welded portion 21 and becomes reflected light 50 from the welded portion 21. The visible light 40 and the reflected light 50 are reflected by the scan mirror 39, transmitted through the mirror 38, and enter a beam splitter 62 through one or a plurality of mirrors 60 and an optical fiber 61.

The beam splitter 62 comprises a first sensor 41 as a visible light sensor 41, a second sensor 51 as a reflected light sensor 51, a dichroic mirror 63, and an interference filter 64 that transmits only wavelengths of 1064 nm ± 10 nm. The first sensor 41 and the second sensor 51 are each composed of a photodiode. The photodiode outputs a voltage that is correlated with light intensity. In the beam splitter 62, first the incident light from the welded portion 21 is selected by the dichroic mirror 63 according to the wavelength. Of the incident light, visible light 40 having a wavelength of 750 nm or less passes through the dichroic mirror 63 and is led to the first sensor 41. The first sensor 41 converts the emission intensity V1 of the received visible light 40 into an electric signal and inputs the electric signal to the control unit 70. Of the incident light, infrared light is reflected by the dichroic mirror 63, after which only the YAG laser beam 31 having a wavelength of 1.06 µm passes through the interference filter 64 and is led to the second sensor 51. The second sensor 51 converts the intensity V2 of the received reflected light 50 into an electric signal and inputs the electric signal to the control unit 70. The respective electric signals from the first sensor 41 and the second sensor 51 are input to the control unit 70 via a preamplifier, a filter, an AD converter, and the like.

The control unit 70 is primarily composed of a CPU and a memory. An emission intensity signal of the visible light 40 that is detected by the first sensor 41 and an intensity signal of the reflected light 50 that is detected by the second sensor 51 are input into the CPU. The CPU outputs signals for controlling the operations of the YAG laser oscillator 33 of the laser irradiation unit 30, the variable focus mechanism 37, the scan mirror 39, and the like. In addition, the CPU outputs a signal for controlling the attitude of the scan head 35 to a servo motor for driving the joint axes of the robot hand 34 and the like. In addition to a program for controlling the operation of each unit, the memory stores a program for detecting a hole 22 that is generated after welding based on changes in the emission intensity V1 of the visible light 40. In addition, the memory stores a program for detecting a hole 22 that is generated after welding based on changes in the emission intensity V1 of the visible light 40 and changes in the intensity V2 of the reflected light 50. A monitor 71 is connected to the control unit 70, and the monitor 71 displays the emission intensity V1 of the visible light 40, the intensity V2 of the reflected light 50, the presence or absence of a hole defect, and the like.

The control unit 70 controls the laser irradiation unit 30 such that the amount of heat applied to the welded portion 21 by the inspection light 32 is adjusted to an amount of heat that does not exceed the amount of heat at which the welded portion 21 remelts. Thus, it is possible to irradiate inspection light 32 and detect a hole 22 generated after welding, while maintaining a state in which the welded portion 21 does not remelt.

The control unit 70 adjusts one or more of the output, the beam diameter, and the scanning speed of the laser beam 31 irradiated as an inspection light 32. By reducing the laser output, increasing the scanning speed, or increasing the spot diameter, it is possible to adjust the amount of heat that is input to the welded portion 21 and to easily adjust to an amount of heat that does not exceed the amount of heat at which the welded portion 21 remelts. It is sufficient to adjust only one of the output, the beam diameter, and the scanning speed of the laser beam 31. For example, even if the laser output is set to be the same as the time of welding, the amount of heat that is input to the welded portion 21 can be adjusted by increasing the scanning speed.

Figures 2(A) and (B) are explanatory views illustrating the principle of a method for detecting a hole 22 that is generated in a laser welded portion 21 after welding, and Figure 2(A) is a view illustrating changes in the emission intensity V1 of the visible light 40 and changes in the intensity V2 of the reflected light 50 when a hole 22 is not generated in the laser welded portion 21 after welding. Figure 2(B) is a view illustrating changes in the emission intensity V1 of the visible light 40 and changes in the intensity V2 of the reflected light 50 when a hole 22 (through-hole 22a) is generated in the laser welded portion 21 after welding. Figure 2(C) is a view illustrating a state in which a hole 22 (non-through-hole 22b) is generated in the laser welded portion after welding.

The first sensor 41 and the second sensor 51 are each composed of a photodiode, which outputs a voltage that is correlated with light intensity. Referring to Figure 2(A), if a hole 22 is not generated in the welded portion 21 after laser welding is completed and the molten metal is solidified, the emission intensity V1 of the visible light 40 and the intensity V2 of the reflected light 50 do not change significantly.

On the other hand, referring to Figure 2(B), if a hole 22 is generated in the welded portion 21 after laser welding is completed and the molten metal is solidified, the respective voltage outputs from the first sensor 41 and the second sensor 51 significantly drop at the portion where the hole 22 is generated.

Therefore, it is possible to detect a hole 22 that is generated after welding based on changes in the emission intensity V1 of the visible light 40. Additionally, it is possible to detect a hole 22 that is generated after welding based on changes in the emission intensity V1 of the visible light 40 and changes in the intensity V2 of the reflected light 50. In the conventional method that uses laser beam 31 during welding, holes 22 that are generated after welding could not be detected. In contrast thereto, in the present embodiment it is possible to detect a hole defect that occurs after welding.

Here, the advantages of detecting a hole 22 that is generated after welding based on changes in the intensity V2 of the reflected light 50 in addition to changes in the emission intensity V1 of the visible light 40 are as follows.

When carrying out welding and inspection with one laser welding device 10, it is possible to accurately detect a hole 22 that is generated after welding based on changes in the emission intensity V1 of the visible light 40.

On the other hand, when welding a large number of welding points simultaneously using a plurality of laser welding devices 10, the following problems occur if the welding points are relatively close to one another. The visible light 40 from the welded portion 21 is emitted radially, and the emission intensity V1 is extremely strong even in the inspection mode. Consequently, there are cases in which the visible light 40 emitted from one laser welding device 10 is led to a first sensor 41 of another laser welding device 10 being operated in the inspection mode. In this case the visible light 40 is superimposed on the other laser welding device 10. Consequently, even if a hole 22 is generated after welding, the emission intensity V1 of the visible light 40 does not significantly change, and consequently it becomes impossible to accurately detect a hole 22 generated after welding.

Because the irradiated inspection light 32 tends to be reflected by minute irregular shapes on the surface of the welded portion 21, the reflected light 50 that is led to the second sensor 51 only amounts to several percent of the inspection light 32. Consequently, a case in which the reflected light 50 from the welded portion 21 in one laser welding device 10 is led to a second sensor 51 of another laser welding device 10 that is being operated in the inspection mode will not substantially occur.

Therefore, it becomes possible to increase the detection accuracy of a hole 22 generated after welding by basing the detection on changes in the intensity V2 of the reflected light 50, in addition to changes in the emission intensity V1 of the visible light 40. In particular, a remarkable effect is achieved wherein it becomes possible to accurately detect a hole 22 generated after welding, even when welding a large number of welding points simultaneously using a plurality of laser welding devices 10.

The hole 22 to be detected may be either a through-hole 22a (refer to Figure 2(B)) extending from one surface 21a to the other surface 21b of the welded portion 21 or a non-through-hole 22b (refer to Figure 2(C)) that does not reach the other surface 21b.

Regardless of whether the hole is a through-hole 22a or a non-through-hole 22b, the amount of solidified molten metal in the portion of the through-hole 22a or the non-through-hole 22b is different from that in the other portions. Accordingly, a large change appears in the emission intensity V1 of the visible light 40 or in the intensity V2 of the reflected light 50. As a result, it is possible to accurately detect a through-hole 22a or a non-through-hole 22b generated after welding.

In the event a hole 22 that is generated after welding is detected, whether the detected hole 22 is a through-hole 22a or a non-through-hole 22b can be determined as follows.

First, reference waveforms of the changes in the emission intensity V1 of the visible light 40 are acquired and stored in advance, for a through-hole 22a and for a non-through-hole 22b. Then, the changes in the emission intensity V1 of the visible light 40 obtained in the inspection mode are compared with the reference waveform for a through-hole 22a and the reference waveform for a non-through-hole 22b. The hole 22 (through-hole 22a or non-through-hole 22b) having a reference waveform that displays the more similar waveform is determined to be the type of hole 22 (through-hole 22a or non-through-hole 22b) generated after welding. Changes in the intensity V2 of the reflected light 50 may also be compared with reference waveforms, in addition to comparing the changes in the emission intensity V1 of the visible light 40 with the reference waveforms. Reference waveforms of the changes in the intensity V2 of the reflected light 50 are acquired and stored in advance, both for a through-hole 22a and for a non-through-hole 22b. Then, the changes in the intensity V2 of the reflected light 50 obtained in the inspection mode are compared with the reference waveform for a through-hole 22a and the reference waveform for a non-through-hole 22b. The hole 22 (through-hole 22a or non-through-hole 22b) having a reference waveform that displays the more similar waveform is determined to be the type of hole 22 (through-hole 22a or non-through-hole 22b) that was generated after welding.

Figures 3(A) and (B) are explanatory views illustrating an irradiation angle θ of the laser beam 31 with respect to the welded portion 21 as an inspection light 32 is radiated from the laser irradiation unit 30, and Figure 3(A) illustrates the irradiation angle θ in a plane that intersects a scanning direction of the laser beam 31 in which the welded portion 21 extends (direction perpendicular to the paper surface). Figure 3(B) illustrates the irradiation angle θ in a plane including the scanning direction b of the laser beam 31 in which the welded portion 21 extends (illustrated by the open arrow).

Referring to Figures 3(A) and (B), in the inspection mode, the irradiation angle θ, with respect to the welded portion 21, of the laser beam 31 as an inspection light 32 that is radiated from the laser irradiation unit 30 is preferably in the range of an angle at which the inspection light 32 is irradiated into the hole 22 generated after welding from a normal line a on the surface of the metal member 20. Here, the "angle at which the inspection light 32 is irradiated into the hole 22 generated after welding" is not particularly limited, but is approximately 20 degrees. The angle a between the inspection light 32 and the scanning direction b at the inspection site may be either obtuse or acute, as illustrated in Figure 3(B).

As described above, regardless of the hole being a through-hole 22a or a non-through-hole 22b, the amount of solidified molten metal in the portion of the through-hole 22a or the non-through-hole 22b is different from that in the other portions. Accordingly, by setting the irradiation angle θ, with respect to the welded portion 21, of the laser beam 31 as an inspection light 32 in the range of an angle at which the inspection light 32 is irradiated into the hole 22 generated after welding from a normal line a on the surface of the metal member 20, a large change appears in the emission intensity V1 of the visible light 40 or a large change appears in the intensity V2 of the reflected light 50. Consequently, it is possible to accurately detect a through-hole 22a or a non-through-hole 22b generated after welding.

Figure 4 is a flowchart explaining the operation of the laser welding device 10.

Referring to Figure 4, the control unit 70 sets the operation of the laser irradiation unit 30 to a welding mode for irradiating laser beam 31 and welding a plurality of metal members 20 to each other (Step S11). The control unit 70 drives the robot hand 34 and controls the attitude of the scan head 35 in accordance with the welding position and the welding direction. The control unit 70 drives the YAG laser oscillator 33 to oscillate the scan mirror 39 from the initial position and condenses and scans the laser beam 31 onto the surface of the metal members 20. The plurality of metal members 20 are thereby welded to each other. The control unit 70 turns the scan mirror 39 and continues the welding mode of Step S11 until the forming of a welded portion 21 having a predetermined length is completed (Step S12, NO).

When the scan mirror 39 turns by a predetermined angle and it is determined that the forming of the welded portion 21 having a predetermined length is completed (Step S12, YES), the control unit 70 stops the operation of the YAG laser oscillator 33. The control unit 70 switches the operation of the laser irradiation unit 30 to the inspection mode for irradiating the laser beam 31 again onto the welded portion 21 as an inspection light 32 after the welding mode (Step S13). The control unit 70 returns the scan mirror 39 to the initial position while maintaining the attitude of the scan head 35. The control unit 70 drives the YAG laser oscillator 33 again to oscillate the scan mirror 39 from the initial position, and causes the laser beam 31 to be irradiated again onto the welded portion 21 as an inspection light 32. By irradiating the laser beam 31 onto the welded portion 21 again as an inspection light 32, visible light 40 is emitted from the welded portion 21 that is heated. In addition, a portion of the laser beam 31 that is irradiated as an inspection light 32 is not absorbed by the welded portion 21 and becomes reflected light 50 from the welded portion 21. Because the driving of the scan mirror 39 can be controlled by means of a servo motor without moving the joint axes of the robot hand 34, it becomes possible to irradiate laser beam 31 as an inspection light 32 continuously and at a high speed.

The visible light 40 and the reflected light 50 enter a beam splitter 62. In the beam splitter 62, of the incident light from the welded portion 21, visible light is led to the first sensor 41 and only the YAG laser beam 31 having a wavelength of 1.06 µm passes through the interference filter 64 and is led to the second sensor 51. An emission intensity signal of the visible light 40 that is detected by the first sensor 41 and an intensity signal of the reflected light 50 that is detected by the second sensor 51 are input into the control unit 70 (Step S14).

The control unit 70 detects the presence or absence of a hole 22 that is generated after welding based on changes in the emission intensity V1 of the visible light 40 and changes in the intensity V2 of the reflected light 50 (Step S15). The control unit 70 turns the scan mirror 39 and continues the inspection mode of Steps S13-S15 until the inspection of the welded portion 21 over the entire length is completed (Step S16, NO).

When the scan mirror 39 turns by a predetermined angle and it is determined that the inspection of the welded portion 21 over the entire length has been completed (Step S16, YES), the control unit 70 stops the operation of the YAG laser oscillator 33 and stops the laser beam 31 from being irradiated again as an inspection light 32.

When welding and inspection with respect to one welding spot are completed, the control unit 70 changes the initial position of the scan mirror, drives the robot hand 34 to change the attitude of the scan head 35, etc. in order to weld the next welding spot.

When welding and inspection with respect to all the welding spots that have been set in one workpiece (for example, an automobile panel material) are completed (Step S17), the control unit 17 determines the welding quality of the one workpiece (Step S18).

Various criteria for determination of the welding quality (Step S18) can be set according to the characteristics of the workpiece to be laser welded. For example, the welding quality is determined to be "NG" when even one hole 22 that is generated after welding is detected. It is also possible to determine the welding quality to be "OK" when holes 22 that are generated after welding are detected but the ratio thereof with respect to the entire length of one welding portion 21 is equal to or less than an allowable ratio from the point of view of joining strength.

### (Experimental examples)

Figures 5(A) and (B) are views illustrating the result of carrying out an experiment to detect a hole 22 using a test piece in which a hole 22 has been formed; Figure 5(A) is a graph illustrating a test piece in which a hole 22 has been formed and changes in the emission intensity V1 of the visible light 40, and Figure 5(B) is a graph illustrating a test piece in which a hole 22 has been formed and changes in the intensity V2 of the reflected light 50. In each graph, the graph shown in the upper portion shows a partially enlarged scale of the graph shown in the lower portion.

A linear-shaped welded portion 21 (weld bead) was formed in the test piece. A hole 22 was formed in the welded portion 21. The laser beam 31 to be irradiated as an inspection light 32 was scanned at a speed of 150 mm/s for 15 mm. The output of the laser beam 31 was set to 500 W. The irradiation angle θ within a plane intersecting the direction in which the welded portion 21 extends, that is, the scanning direction of the laser beam 31, was set to 10 degrees (refer to Figure 3(A)). The irradiation angle θ within a plane that includes the direction in which the welded portion 21 extends, that is, the scanning direction of the laser beam 31, was set to zero, that is, to the normal direction of the surface of the metal member 20 (refer to Figure 3(B)).

Referring to Figure 5(A), the emission intensity V1 of the visible light 40 showed the lowest intensity at the position of the hole 22 of the welded portion 21 along the scanning direction. In addition, referring to Figure 5(B), the intensity V2 of the reflected light 50 showed the lowest intensity at the position of the hole 22 of the welded portion 21 along the scanning direction. Accordingly, it was confirmed that a hole 22 present in the welded portion 21 can be detected based on changes in the emission intensity V1 of the visible light 40. In addition, it was confirmed that a hole 22 present in the welded portion 21 can be detected based on changes in the emission intensity V1 of the visible light 40 and the changes in the intensity V2 of the reflected light 50.

As described above, according to the hole detection method for detecting a hole in a laser welded portion 21 of the present embodiment, laser beam 31 is irradiated to weld a plurality of metal members 20 to each other, after which the laser beam 31 is irradiated again onto the welded portion 21 as an inspection light 32. Then, the emission intensity V1 of the visible light 40 that is emitted from the welded portion 21 is detected by irradiating the inspection light 32, to detect holes 22 generated after welding based on changes in the emission intensity V1 of the visible light 40. According to the laser welding device 10 of the present embodiment that embodies the hole detection method described above, the control unit 70 switches the operation of the laser irradiation unit 30 to the inspection mode after the welding mode and irradiates the laser beam 31 again from the laser irradiation unit 30 onto the welded portion 21 as an inspection light 32. Based on a detection signal from the first sensor 41, the control unit 70 also detects a hole 22 generated after welding based on changes in the emission intensity V1 of the visible light 40 emitted from the welded portion 21 due to irradiation of the inspection light 32.

According to this method and device, if a hole 22 is generated in the welded portion 21 after laser welding is completed and the molten metal is solidified, the emission intensity V1 of the visible light 40 changes greatly at the position of the hole 22. Accordingly, it is possible to easily detect a hole defect that occurs after welding based on changes in the emission intensity V1 of the visible light 40. Because a known laser beam 31 for laser welding is also used as the inspection light 32, it is not necessary to provide dedicated laser equipment for inspection. It is possible to use known laser beam 31 and robotic equipment for laser welding, and detection of hole defects can be realized relatively inexpensively.

According to the hole detection method, the intensity V2 of the reflected light 50 from the welded portion 21 of the laser beam 31 that is irradiated as an inspection light 32 is detected and a hole 22 generated after welding is detected based on changes in the emission intensity V1 of the visible light 40 and changes in the intensity V2 of the reflected light 50. In addition, according to the laser welding device 10, the control unit 70 is capable of easily detecting a hole defect that occurs after welding based on changes in the emission intensity V1 of the visible light 40 and changes in the intensity V2 of the reflected light 50, based on a detection signal from the second sensor 51.

According to such a method and device, if a hole 22 is generated in the welded portion 21 after laser welding is completed and the molten metal is solidified, the emission intensity V1 of the visible light 40 and the intensity V2 of the reflected light 50 change significantly at the position of the hole 22. Accordingly, it is possible to detect a hole 22 that is generated after welding based on changes in the emission intensity V1 of the visible light 40 and changes in the intensity V2 of the reflected light 50. It becomes possible to increase the detection accuracy of a hole 22 generated after welding by basing the detection on changes in the intensity V2 of the reflected light 50, in addition to the changes in the emission intensity V1 of the visible light 40. In particular, a remarkable effect is achieved whereby it becomes possible to accurately detect a hole 22 generated after welding, even when welding a large number of welding points simultaneously using a plurality of laser welding devices 10.

According to the hole detection method, the amount of heat that is applied to the welded portion 21 by the inspection light 32 is preferably adjusted to an amount of heat that does not exceed the amount of heat at which the welded portion 21 remelts. Additionally, according to the laser welding device 10, the control unit 70 preferably controls the laser irradiation unit 30 such that the amount of heat applied to the welded portion 21 by the inspection light 32 is adjusted to an amount of heat that does not exceed the temperature at which the welded portion 21 remelts.

According to such a method and device, it is possible to irradiate inspection light 32 and detect a hole 22 generated after welding while maintaining a state in which the welded portion 21 does not remelt.

According to the hole detection method, it is preferable to adjust one or more of the output, the beam diameter, and the scanning speed of the laser beam 31 irradiated as an inspection light 32. In addition, according to the laser welding device 10, the control unit 70 preferably adjusts one or more of the output, the beam diameter, and the scanning speed of the laser beam 31 irradiated as an inspection light 32.

According to such a method and device, it is possible to adjust the amount of heat that is input to the welded portion 21 and to easily adjust it to an amount of heat that does not exceed the amount of heat at which the welded portion 21 remelts by reducing the laser output, increasing the scanning speed, or increasing the spot diameter.

The irradiation angle θ of the inspection light 32 with respect to the welded portion 21 is preferably in the range of an angle at which the inspection light 32 is irradiated into the hole 22 generated after welding from a normal line on the surface of the metal member 20.

A large change appears in the emission intensity V1 of the visible light 40 or a large change appears in the intensity V2 of the reflected light 50. Consequently, it is possible to accurately detect a hole 22 generated after welding.

The hole 22 to be detected is a through-hole 22a that extends through from one surface 21a to the other surface 21b of the welded portion 21 or a non-through-hole 22b that does not reach the other surface 21b.

Regardless of whether the hole is a through-hole 22a or a non-through-hole 22b, the amount of solidified molten metal in the portion of the through-hole 22a or the non-through-hole 22b is different from that in the other portions. Accordingly, a large change appears in the emission intensity V1 of the visible light 40 or a large change appears in the intensity V2 of the reflected light 50. Consequently, it is possible to accurately detect a through-hole 22a or a non-through-hole 22b that is generated after welding.

The present application is based on Japanese Patent Application No. 2016-005469 submitted on January 14, 2016, and the contents disclosed therein have been referenced and fully incorporated herein.

### Descriptions of the Reference Symbols

- 10: Laser welding device,
- 20: Metal member,
- 21: Welded portion,
- 21a: One surface,
- 21b: Other surface,
- 22: Hole,
- 22a: Through-hole,
- 22b: Non-through-hole,
- 30: Laser irradiation unit,
- 31: Laser beam,
- 32: Inspection light,
- 33: YAG laser oscillator,
- 34: Robot hand,
- 35: Scan head,
- 37: Variable focus mechanism,
- 39: Scan mirror,
- 40: Visible light,
- 41: First sensor (visible light sensor),
- 50: Reflected light,
- 51: Second sensor (reflected light sensor),
- 62: Beam splitter,
- 70: Control unit,
- G: Irradiation angle,
- V1: Emission intensity of visible light,
- V2: Intensity of reflected light.

## Claims

1. A hole detection method for detecting a hole in a laser welded portion comprising: irradiating a laser beam onto a welded portion as an inspection light after irradiating the laser beam to weld a plurality of metal members to each other; detecting an emission intensity of visible light that is emitted from the welded portion by irradiation of the inspection light; and detecting a hole generated after welding based on changes in the emission intensity of the visible light.

2. The hole detection method of a laser welded portion according to claim 1, wherein the detecting of the hole that is generated after welding based on changes in the emission intensity of the visible light and changes in the intensity of the reflected light is performed by detecting an intensity of reflected light of the laser beam from the welded portion that is irradiated as the inspection light.

3. The hole detection method of a laser welded portion according to claim 1 or 2, comprising adjusting an amount of heat that is applied to the welded portion by the inspection light to be an amount of heat that does not exceed an amount of heat to remelt the welded portion.

4. The hole detection method of a laser welded portion according to claim 3, comprising adjusting one or more of an output, a beam diameter, and a scanning speed of the laser beam that is irradiated as the inspection light.

5. The hole detection method of a laser welded portion according to any one of claims 1 to 4, wherein an irradiation angle of the inspection light with respect to the welded portion is in a range of an angle at which the inspection light is irradiated into the hole generated after welding from a normal line on a surface of the metal members.

6. The hole detection method of a laser welded portion according to any one of claims 1 to 5, wherein the detecting of the hole includes detecting a through-hole extending from one surface to the other surface of the welded portion or a non-through-hole that does not reach the other surface.

7. A laser welding device comprising:
a laser irradiation unit that irradiates a laser beam;
a visible light sensor that detects an emission intensity of the visible light that is emitted from a welded portion that is welded using the laser beam irradiated from the laser irradiation unit; and
a control unit that can freely switch an operation of the laser irradiation unit between a welding mode for welding a plurality of metal members to each other by irradiating the laser beam and an inspection mode for irradiating the laser beam again onto the welded portion as an inspection light,
the control unit being configured to switch the operation of the laser irradiation unit to the inspection mode after the welding mode and irradiate the laser beam again from the laser irradiation unit onto the welded portion as an inspection light, and further detecting a hole that is generated after welding based on changes in the emission intensity of the visible light that is emitted from the welded portion due to irradiation of the inspection light based on a detection signal from the visible light sensor.

8. The laser welding device according to claim 7, further comprising
a reflected light sensor that detects an intensity of reflected light of the laser beam from the welded portion irradiated as an inspection light
the control unit being configured to detect the hole generated after welding based on changes in the emission intensity of the visible light and changes in the intensity of the reflected light based on a detection signal from the reflected light sensor.

9. The laser welding device according to claim 7 or 8, wherein the control unit is configured to control the laser irradiation unit such that an amount of heat that is applied to the welded portion by the inspection light is adjusted to be an amount of heat that does not exceed an amount of heat that remelts the welded portion.

10. The laser welding device according to claim 9, wherein the control unit is configured to adjust one or more of an output, a beam diameter, and a scanning speed of the laser beam irradiated as the inspection light.

11. The laser welding device according to any one of claims 7 to 10, wherein the irradiation angle of the inspection light with respect to the welded portion is in a range of an angle at which the inspection light is irradiated into the hole generated after welding from a normal line on a surface of the metal member.

12. The laser welding device according to any one of claims 7 to 11, wherein the hole to be detected is a through-hole extending from one surface to the other surface of the welded portion or a non-through-hole that does not reach the other surface.
